# EUROPEAN PATENT APPLICATION

(11) **EP 4 668 382 A1**
(43) Date of publication of application: **24.12.2025**
(21) Application number: 24826225.5
(22) Date of filing: 18.06.2024
(51) Int. Cl.: H01M 10/04, H01M 4/04

(54) **BATTERY CELL PRESSURIZING DEVICE AND BATTERY CELL MANUFACTURING METHOD**

(30) Priority: 23.06.2023 KR 20230081295
(71) Applicant: LG Energy Solution, Ltd., Seoul 07335 (KR)
(72) Inventor: JO, Seung Ill, Daejeon 34122 (KR); BAE, Hyun Woo, Daejeon 34122 (KR)
(74) Representative: Goddar, Heinz J.
(86) International application number: PCT/KR2024/008397
(87) International publication number: WO 2024/262909

(57) **Abstract**

The present invention relates to a battery cell pressurizing device and a battery cell manufacturing method using the same, and more specifically, relates to a battery cell pressurizing device uniformly pressurizing a battery cell, and a battery cell manufacturing method using the same.

According to one example of the present invention, a battery cell pressurizing device may be provided, which comprises: a first end plate located on one side; a second end plate facing the first end plate to be located on the other side; a pressurizing plate moving and pressurizing the first end plate in a direction where the plurality of battery cells is laminated so that the plurality of battery cells arranged between the first end plate and the second end plate is pressurized; a first pressurizing member provided to pressurize the central portion of the first end plate through the pressurizing plate by pressurizing the central portion of the pressurizing plate; and a second pressurizing member and a third pressurizing member provided to pressurize, based on the center of the first end plate, one side portion and the other side portion, respectively.

## Description

### Technical Field

The present invention relates to a battery cell pressurizing device and a battery cell manufacturing method using the same, and more specifically, relates to a battery cell pressurizing device uniformly pressurizing a battery cell, and a battery cell manufacturing method using the same.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 V to 37 V) unit cell among existing secondary batteries, and excellent energy densities, so that they can have characteristics optimized for mobile devices.

As the lithium secondary battery, a pouch-type battery cell is widely used, in which an electrode assembly is sealed by a pouch, which is an aluminum sealing material.

In general, the electrode assembly, which is the internal component of the battery cell, is manufactured by assembling unit bodies laminated in a three-layer structure of positive electrode/separator/negative electrode, or a five-layer structure of positive electrode/separator/negative electrode/separator/positive electrode or negative electrode/separator/positive electrode/separator/negative electrode and integrating them. Then, such an electrode assembly is accommodated in a pouch case that is an encapsulating material. The pouch type accommodates the electrode assembly in a pouch made of a soft polymer material with an irregular shape.

The pouch, which is a case of a pouch-type battery cell, is manufactured by forming a cup-shaped accommodating part accommodating an electrode assembly in a pouch film made of a flexible material. That is, when the accommodating part provided with an accommodating space accommodating the electrode assembly is formed in the pouch film, the electrode assembly is stored in the accommodating space of the accommodating part, and the edge portion is sealed, thereby manufacturing a secondary battery. Such a pouch film is made up of multiple layers, such as an external coating layer, a metal barrier layer, and an internal adhesive layer.

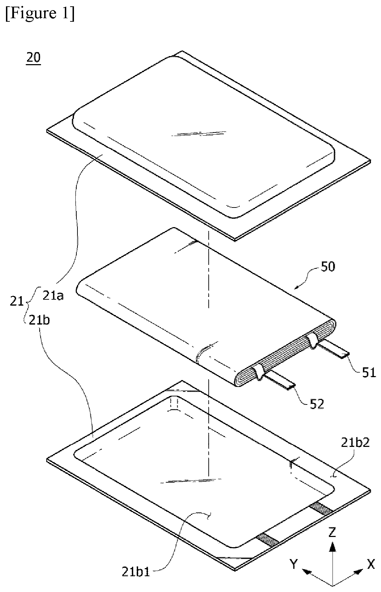

Figure 1 is an exploded perspective diagram showing components of a pouch-type secondary battery of a conventional art.

For example, as shown in Figure 1, the electrode assembly (50) is accommodated in the accommodating part (21b1) formed in the lower pouch film (21b). At this time, the electrode assembly (50) has leads (51, 52), where the leads may be divided into a positive electrode lead (51) and a negative electrode lead (52). In a state where such an electrode assembly (50) is accommodated in the accommodating part (21b1), an electrolyte may be injected, and the edge portions (21b2) of the upper pouch film (21a) and the lower pouch film (21b) may be heat-fused to seal them. Thereafter, a charge/discharge (activation process) and an inspection process may be performed.

The pouch-type battery cell requires a squeezing operation of pressing the accommodating part of the pouch of the battery cell by pressurization for increasing a battery capacity, because the electrolyte filled inside the pouch reacts upon charging and simultaneously gas is generated, whereby the pouch swells convexly to the outside. By performing such a squeezing operation, the internal gap of the electrode assembly of the battery cell contacts as compactly as possible, and the electrolyte filled inside the pouch is evenly spread, thereby increasing the battery capacity. In such a squeezing operation, a pressurizing device for pressurizing the pouch-type battery cell is used.

In addition, the pressurizing device may be used as a formation jig activating a pouch-shaped battery cell by pressurization at a constant pressure. A device performing pressurization of a plurality of battery cells through a plurality of partition plates is generally called a jig, and a process of activating the battery cell by additionally controlling temperature and pressure in addition to current and capacity using such a jig among activation processes is called a formation process.

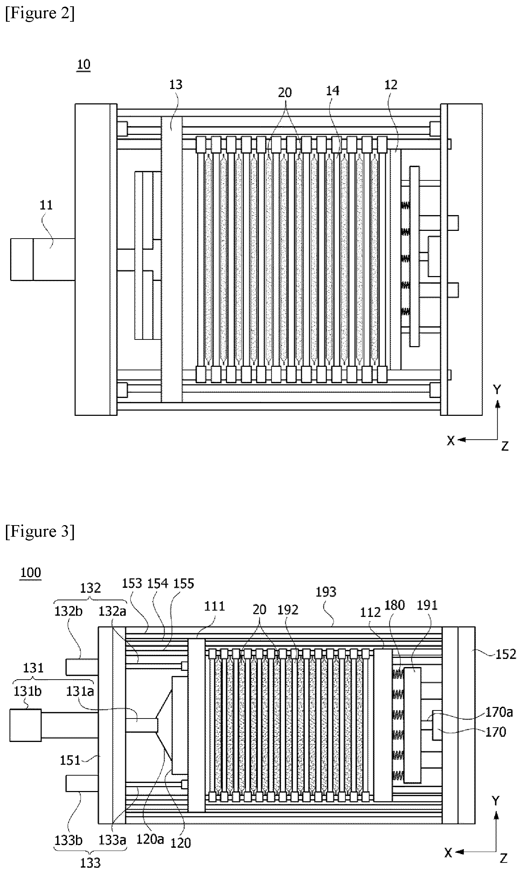

Figure 2 is a plan view of a pressurizing device of a prior patent.

As shown in Figure 2, the conventional pressurizing device (10) comprises a first end plate (13) and a second end plate (12) at the front and rear, respectively, and is configured to accommodate a plurality of battery cells (20) arranged in the front-back direction (X-axis direction) between the end plates (13, 12). A plurality of partition plates (14) is provided between the first end plate (13) and the second end plate (12), and the battery cell (20) is positioned between the partition plates. Then, the first end plate (13) can pressurize the plurality of battery cells backward by receiving the pressurizing force of the pressurizing member (11) and conversely, if the pressurizing member (11) is driven to move the first end plate (13) in the opposite direction of the pressurizing direction, the pressurization on the plurality of battery cells can be released. The second end plate (12) performed a function of supporting the plurality of pressurized battery cells forward.

Conventionally, the pressurization was performed by pressurizing only the central portion of the first end plate (13) by means of a single pressurizing member (11) using a servo motor to move the first end plate (13). In this case, the pressurizing force received by the plurality of battery cells (20) was concentrated on the central portion of the first end plate (13), thereby causing a deviation in the pressurizing force between the central portion and both side portions, or the pressurizing force was concentrated on one of both side portions, whereby it was easy to cause a deviation in the pressurizing force on both side portions in the Y-axis direction. Therefore, in the pressurizing device of the conventional art, the pressurization on multiple battery cells was performed unevenly, or pressurization unevenness occurred depending on the location of a single battery cell. Therefore, the battery capacity of the pouch-type battery cell was not constant, and it became a factor of increasing the occurrence rate of defective battery cells with a low capacity that did not reach the standard battery capacity.

For example, Korean Laid-Open Patent Publication No. 10-2022-0101269 (hereinafter, referred to as "prior patent") discloses a pressurizing tray capable of pressurizing the plurality of battery cells and an activation device for a battery cell comprising the same.

Specifically, the first and second main plates of the prior patent pressurize or depressurize a plurality of battery cells by rotational movement of drive shafts. In addition, four drive shafts are connected to the respective edge regions of the first main plate and the second main plate. Depending on the rotational direction, the four drive shafts can screw-move the first main plate and the second main plate in a direction closer to each other, or screw-move them in a direction away from each other.

However, in the prior patent, the pressurizing force is concentrated on the edge regions where the respective four drive shafts of the first main plate and the second main plate are located, so that it is easy for deviations in the pressurizing force applied to the centers and both side portions of the first main plate and the second main plate to occur. Moreover, since the prior patent uses only one motor to rotate the four drive shafts, it has a limitation that even if the pressurizing force deviation occurs on the left and right sides of the first main plate and the second main plate, it is impossible to control the pressurizing force for correcting the deviation.

For such a reason, the conventional art still has the problem of unevenly pressurizing multiple battery cells, and particularly, it is necessary to prevent a lithium precipitation phenomenon that can occur due to thickness and pressurization deviations of the battery cells. Therefore, there is an urgent need to develop a technology that can minimize the defects occurring in such an activation process.

### Disclosure

### Technical Problem

It is an object of the present invention to solve a problem of a battery cell pressurizing device used in a conventional activation process.

Through one example of the present invention, it is intended to provide a battery cell pressurizing device pressurizing a plurality of battery cells with a uniform pressurizing force, and a battery cell manufacturing method using the same.

Through one example of the present invention, it is intended to provide a battery cell pressurizing device and a battery cell manufacturing method, which can prevent a lithium precipitation phenomenon due to pressurizing imbalance by resolving a battery cell pressurization unevenness phenomenon between the center and one side.

### Technical Solution

In order to achieve the above-described objects, according to one example of the present invention, a battery cell pressurizing device may be provided, which comprises: a first end plate located on one side; a second end plate facing the first end plate to be located on the other side; a pressurizing plate moving and pressurizing the first end plate in a direction where the plurality of battery cells is laminated so that the plurality of battery cells arranged between the first end plate and the second end plate is pressurized; a first pressurizing member provided to pressurize the central portion of the first end plate through the pressurizing plate by pressurizing the central portion of the pressurizing plate; a second pressurizing member provided to pressurize, based on the center of the first end plate, one side portion independently of the first pressurizing member; and a third pressurizing member provided to pressurize, based on the center of the first end plate, the other side portion independently of the first pressurizing member.

The second pressurizing member and the third pressurizing member may be provided to directly pressurize the first end plate at positions away from the pressurizing plate on both sides.

The second pressurizing member and the third pressurizing member may be provided to pressurize the pressurizing plate on both sides of the pressurizing plate based on the center of the pressurizing plate.

The first pressurizing member, the second pressurizing member, and the third pressurizing member may each comprise a pressurizing rod having a variable length and a drive part driven to vary the length of the pressurizing rod.

It is preferable that it is provided with a first main frame provided on the outer side of the first end plate and formed with a fixing part to which the drive parts of the pressurizing members are fixed; and a second main frame provided on the outer side of the second end plate and forming a pressurizing space by the first end plate and the second end plate between it and the first main frame.

The first main frame and the second main frame may be fixed components.

It is preferable that when the first end plate is pressurized and moved by the first pressurizing member, the pressurizing rods of the second pressurizing member and the third pressurizing member are connected to the first end plate or the pressurizing plate so that their lengths are passively variable.

That is, it is preferable that when the pressurization is performed through the pressurizing rod of the first pressurizing member, the pressurization is not performed through the pressurizing rods of the second pressurizing member and the third pressurizing member.

The pressurizing rods of the second pressurizing member and the third pressurizing member may be connected to the first end plate or the pressurizing plate only when pressurizing the first end plate.

The drive part of the first pressurizing member may comprise a servo motor provided so that the movement distance of the pressurizing rod of the first pressurizing member is precisely controllable.

It is preferable that the drive part and the pressurizing rod of each of the second pressurizing member and the third pressurizing member are a hydraulic cylinder and a cylinder rod provided to be movable with respect to the hydraulic cylinder.

A control unit provided to control operations of the drive parts of the pressurizing members may be included.

The control unit may control the second pressurizing member and the third pressurizing member to pressurize the first end plate after the first pressurizing member pressurizes the first end plate.

It may comprise a pressure sensing unit provided to measure a pressurizing force applied to the battery cell.

It is preferable that the control unit controls operations of the drive parts of the pressurizing members based on the output of the pressure sensing unit.

The control unit may control operations of the drive parts of the pressurizing members so that the first end plate moves a predetermined distance from the initial position to be pressurized.

The control unit may control operations of the drive part of the second pressurizing member and the drive part of the third pressurizing member to eliminate a minute displacement difference occurring between the central portion and both side portions of the first end plate when the first pressurizing member pressurizes the central portion of the first end plate or the second end plate.

It may comprise a distance measuring unit provided to measure the moved displacement of one side and the other side of the first end plate.

It is preferable that the pressurizing plate comprises a rib extending from the center to both sides and having a lower protrusion height as it goes from the center to the extension direction.

The second pressurizing member and the third pressurizing member may be provided to be connected to the pressurizing plate at the outer sides of both sides of the rib.

In order to achieve the above-described objects, according to one example of the present invention, a battery cell manufacturing method using a battery cell pressurizing device having a first end plate, a second end plate, and a pressurizing plate may be provided, which is characterized by comprising: a central pressurizing step in which a first pressurizing member pressurizes the central portion of the pressurizing plate, thereby pressurizing a plurality of battery cells provided between the first end plate and the second end plate through the pressurizing plate; a pressurizing step on one side in which a second pressurizing member pressurizes, based on the center of the first end plate, one side portion, thereby pressurizing the plurality of battery cells independently of the first pressurizing member; and a pressurizing step on the other side in which a third pressurizing member pressurizes, based on the center of the first end plate, the other side portion, thereby pressurizing the plurality of battery cells independently of the first pressurizing member.

It is preferable that the pressurizing step on one side and the pressurizing step on the other side are performed after the completion of the central pressurizing step.

It is preferable that the pressurizing step on one side and the pressurizing step on the other side are performed simultaneously.

### Advantageous Effects

Through one example of the present invention, a second pressurizing member and a third pressurizing member provided to pressurize one side portion and the other side portion of a first end plate or a second end plate independently of a first pressurizing member can uniformly pressurize a plurality of battery cells, whereby it is possible to provide a battery cell pressurizing device and a battery cell manufacturing method, which can effectively reduce a defect rate occurring in a battery cell activation process.

Through one example of the present invention, by sensing a minute displacement difference between one side portion and the other side portion of a first end plate and compensating for it, it is possible to provide a battery cell pressurizing device and a battery cell manufacturing method, which can perform uniform pressurization more completely.

Through one example of the present invention, it is possible to minimize a deviation of pressurizing forces applied to both sides of a plurality of battery cells, thereby manufacturing battery cells with a certain specification (battery capacity), and it is possible to provide a battery cell pressurizing device and a battery cell manufacturing method, which can effectively reduce a defect rate occurring in an activation process of the battery cells.

Through one example of the present invention, it is possible to provide a battery cell pressurizing device and a battery cell manufacturing method, which can stably maintain a state where battery cells are pressurized uniformly for a long time.

### Description of Drawings

Figure 1 is an exploded perspective diagram showing components of a pouch-type battery cell of a conventional art.
Figure 2 is a plan view showing components of a pressurizing device pressurizing a pouch-type battery cell of a conventional art.
Figure 3 is a plan view schematically showing an appearance of components of a battery cell pressurizing device according to one example of the present invention.
Figure 4 is a conceptual diagram schematically showing some components of a battery cell pressurizing device according to one example of the present invention.
Figure 5 is a vertical cross-sectional diagram schematically showing an appearance of a battery cell pressurizing device according to one example of the present invention.
Figure 6 is a perspective diagram schematically showing an appearance of some components of a battery cell pressurizing device according to one example of the present invention.
Figure 7 is a plan view schematically showing an appearance of components of a battery cell pressurizing device according to another example of the present invention.
Figure 8 is a plan view schematically showing an appearance of components of a battery cell pressurizing device according to another example of the present invention.
Figure 9 is a plan view schematically showing an appearance of components of a battery cell pressurizing device according to another example of the present invention.

### Mode for Invention

Hereinafter, a pouch forming device according to one example of the present invention will be described in detail with reference to the attached drawings.

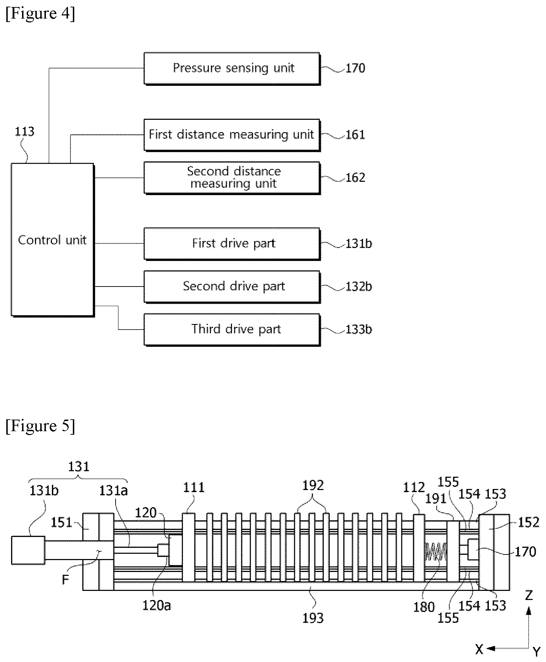

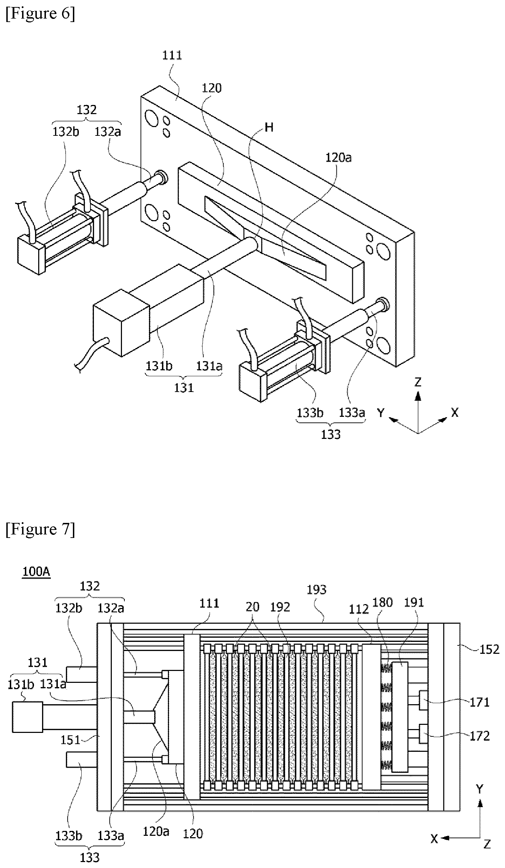

Figure 3 is a plan view schematically showing an appearance of components of a battery cell pressurizing device (100) according to one example of the present invention, Figure 4 is a block diagram schematically showing some components of a battery cell pressurizing device (100) according to one example of the present invention, Figure 5 is a vertical cross-sectional diagram schematically showing an appearance of a battery cell pressurizing device (100) according to one example of the present invention, and Figure 6 is a perspective diagram schematically showing an appearance of some components of a battery cell pressurizing device according to one example of the present invention.

The battery cell pressurizing device (100) according to one example of the present invention is a device pressurizing a plurality of battery cells (20) arranged in one direction. Here, the plurality of battery cells (20) may be arranged in an upright form on a base plate (193). In other words, the battery cell (20) may be inserted between a partition plate (192) and a partition plate (192). Here, "one direction" may be the direction (X-axis direction) in which the first end plate (111) and the second end plate (112) face each other.

The battery cell pressurizing device (100) may comprise a first end plate (111) and a second end plate (112).

The first end plate (111) is located on one side of the plurality of battery cells (20) as laminated. The first end plate (111) is provided to pressurize one side of the plurality of battery cells (20) laminated or arranged in one direction.

The second end plate (112) is located on the other side of the plurality of battery cells (20). The second end plate (112) may be provided to support the other side of the plurality of battery cells (20) pressurized to the first end plate (111).

In the first end plate (111) and the second end plate (112), one surface facing the battery cell (20) may correspond to the size of the plurality of battery cells (20), or may have an area larger than that. That is, the first end plate (111) and the second end plate (112) may have a size capable of facing the central portion and both side portions in one surface of the battery cell (20).

The first end plate (111) may be formed larger than the second end plate (112). For example, since the first end plate (111) has been provided to pressurize the plurality of battery cells (20), the matter of forming the first end plate (111) larger than the second end plate (112) may be advantageous in precisely performing compensation control for reducing the deviation of the pressurizing force between the center and both side portions of the first end plate (111).

The battery cell pressurizing device (100) may comprise a pressurizing plate (120). The pressurizing plate (120) may be formed of a metal material having sufficient rigidity to stably pressurize the plurality of battery cells (20).

The pressurizing plate (120) is provided to move the first end plate (111) in the direction in which the plurality of battery cells (20) is laminated. The pressurizing plate (120) may have a structure connected to the first end plate (111). That is, the pressurizing plate (120) is pressurized from pressurizing members (131, 132, 133) to be described below, where the pressurizing force may be transmitted to the first end plate (111) connected to the pressurizing plate (120). As one example, the pressurizing plate may be a constitution surface-contacting the rear of the first end plate upon pressurization, or may be a constitution formed integrally with the first end plate.

The battery cell pressurizing device (100) of the present invention comprises a first pressurizing member (131). The first pressurizing member (131) is provided to pressurize the central portion of the pressurizing plate (120). That is, the first pressurizing member (131) may transmit the pressurizing force to the central portion of the first end plate (111) by pressurizing the central portion of the pressurizing plate (120). At this time, the central portion of the pressurizing plate (120) may be positioned to correspond to the central portion of the first end plate (111).

The first pressurizing member (131) may comprise a first pressurizing rod (131a) provided to be movable in both directions. The first pressurizing member (131) may comprise a first drive part (131b). The first drive part (131b) may be connected to the first pressurizing rod (131a) and may generate a force moving the first pressurizing rod (131a) in both directions. For example, the first drive part (131b) may be provided to move the first pressurizing rod (131a) in the direction where the plurality of battery cells (20) is laminated.

The first pressurizing member (131) may comprise a servo motor connected to the first pressurizing rod (131a). That is, it may comprise, as the drive part of the first pressurizing member (131), a servo motor or a servo cylinder embedding the servo motor. Therefore, it is possible to precisely control the displacement of the first end plate (111) pressurized by the first pressurizing member (131).

It is preferable that the battery cell pressurizing device (100) comprises a second pressurizing member (132). The second pressurizing member (132) is provided to pressurize one side portion (left side portion) based on the center of the first end plate (111). It is preferable that the second pressurizing member (132) is provided to pressurize the first end plate (111) independently of the first pressurizing member (131).

The second pressurizing member (132) may transmit a pressurizing force to one side portion of the plurality of battery cells (20) by pressurizing one side portion of the first end plate (111). Here, the one side portion may mean a portion in a positive (+) direction based on the center of the Y-axis direction of the first end plate (111) or the second end plate (112).

The second pressurizing member (132) may be provided with a second pressurizing rod (132a) in the positive (+) direction of the Y-axis that is provided to be movable in both directions. The second pressurizing member (132) may be provided with a second drive part (132b). The second drive part (132b) may be connected to the second pressurizing rod (132a) and may generate a force moving the second pressurizing rod in both directions.

The second drive part (132b) may be provided to move the second pressurizing rod (132a) in the direction in which the plurality of battery cells (20) is laminated. The second pressurizing member (132) may comprise a one-sided hydraulic cylinder (see Figure 6) as the drive part moving the second pressurizing rod.

It is preferable that the battery cell pressurizing device (100) comprises a third pressurizing member (133). The third pressurizing member (133) in the negative (-) direction of the Y-axis may be provided to pressurize the other side portion (right side portion) based on the center of the first end plate (111). It is preferable that the third pressurizing member (133) is provided to pressurize the first end plate (111) independently of the first pressurizing member (131).

The third pressurizing member (133) may transmit the pressurizing force to the other side portion of the plurality of battery cells (20) by pressurizing the other side portion of the first end plate (111). Here, the other side portion may mean a portion in a negative (-) direction based on the center of the Y-axis direction of the first end plate (111) or the second end plate (112).

The third pressurizing member (133) may be provided with a third pressurizing rod (133a) that is provided to be able to move in both directions. The third pressurizing member (133) may be provided with a third drive part (133b). The third drive part (133b) may be connected to the third pressurizing rod (133a) and may generate a force moving the third pressurizing rod (133a) in both directions. For example, the third pressurizing member (133) may be provided with a hydraulic cylinder on the other side (see Figure 6) as the drive part moving the third pressurizing rod.

It is preferable that the second pressurizing member and the third pressurizing member are provided with the same shape and are symmetrically provided left and right around the first pressurizing member.

The battery cell pressurizing device (100) comprises a second pressurizing member (132) and a third pressurizing member (133) that are provided to pressurize one side portion and the other side portion of the first end plate (111) independently of the first pressurizing member (131). Therefore, the pressurizing force may be applied uniformly to the central portion and both side portions of the plurality of battery cells (20). In addition, the pressurizing force may be applied uniformly to the entire single battery cell (20). Therefore, it is possible to eliminate the pressurizing force deviation for each position of the battery cell.

Accordingly, through the battery cell pressurizing device (100) according to the present example, it is possible to effectively solve the battery cell defect problem during the activation process.

As shown in Figure 6, the respective ends of the second pressurizing rod (132a) and the third pressurizing rod (133a) may be connected to one side portion (left side portion) and the other side portion (right side portion) of the first end plate (111) or the second end plate (112).

In addition, when the first pressurizing rod (131a) of the first pressurizing member (131) pressurizes the central portion of the pressurizing plate (120) to move the first end plate (111), the second pressurizing rod (132a) and the third pressurizing rod (133a) may each be provided to be passively movable by the movement of the first end plate (111) or the second end plate (112).

For example, the second pressurizing rod (132a) and the third pressurizing rod (133a) may each be provided to be always connected to the first end plate (111). Unlike the drawing as illustrated, the second pressurizing rod (132a) and the third pressurizing rod (133a) may each be provided to be always connected to the pressurizing plate (120). In the former case, the second and third pressurizing rods directly pressurize both sides of the first end plate (111), and in the latter case, the second and third pressurizing rods pressurize both sides of the pressurizing plate (120), thereby indirectly pressurizing both sides of the first end plate (111).

In addition, the second pressurizing rod (132a) and the third pressurizing rod (133a) may each be connected to the first end plate (111) or the pressurizing plate (120) only when pressurizing the first end plate (111).

For example, the second pressurizing member (132) may comprise a one-sided hydraulic cylinder. The third pressurizing member (133) may comprise a hydraulic cylinder on the other side. At this time, the second pressurizing rod (132a) and the third pressurizing rod (133a) may each be a piston rod of a hydraulic cylinder. That is, when the second pressurizing rod (132a) and the third pressurizing rod (133a) are each a piston rod connected to a piston inside a cylinder of a hydraulic cylinder, the piston rod may be passively moved by an external force if the pressure of the hydraulic fluid has no function inside the cylinder.

The pressurization may be performed by increasing the length of the piston rod. In this instance, the hydraulic cylinder is driven so that the length of the piston rod increases. On the other hand, the length of the piston rod may be increased by an external force, as one example, a force that pulls the piston rod. At this time, the hydraulic cylinder may not be driven. Therefore, in a state where the terminal of the piston rod is connected to the first end plate or the pressurizing plate, the length of the piston rod may be actively increased for pressurization, or may be passively increased simply.

The battery cell pressurizing device (100) may first pressurize the central portion of the plurality of battery cells (20) as the first pressurizing member (131) pressurizes the pressurizing plate (120), and then pressurize both side portions of the plurality of battery cells (20) using the second pressurizing member (132) and the third pressurizing member (133). In this case, a constitution in which the second pressurizing rod (132a) and the third pressurizing rod (133a) of the second pressurizing member (132) and the third pressurizing member (133) are each passively movable according to the movement of the first end plate (111) or the second end plate (112) is suitable. For this reason, it can be considered that it is preferable that the second pressurizing member (132) and the third pressurizing member (133) use a hydraulic cylinder in which the piston rod freely moves by an external force.

In addition, the first pressurizing member needs to be provided to apply a continuous and constant pressurizing force regardless of the length increase of the pressurizing rod. On the other hand, the second pressurizing member and the third pressurizing member need to be provided, as auxiliary pressurizing means, to apply a pressurizing force in a specific situation or at a specific length. As one example, it is preferable that the pressurization and the pressurization maintenance are further performed through the second pressurizing member and the third pressurizing member in a state where the pressurization is completed and maintained through the first pressurizing member. Therefore, it is preferable that the drive part of the first pressurizing member and the drive parts of the second pressurizing member and the third pressurizing member are provided in different forms.

Figure 7 is a plan view schematically showing components of a battery cell pressurizing device (100A) according to another example of the present invention.

Referring to Figure 7, unlike the battery cell pressurizing device (100) as illustrated in Figure 3, the battery cell pressurizing device (100A) according to another example as illustrated in Figure 7 may be provided so that a second pressurizing member (132) and a third pressurizing member (133) pressurize one side portion and the other side portion of the pressurizing plate (120) based on the center of the pressurizing plate (120). Through this, it may be configured to indirectly pressurize one side portion and the other side portion of the first end plate (111).

Meanwhile, the battery cell pressurizing device (100) according to one example of the present invention may comprise a control unit (113). The control unit (113) may be provided to control the operation of each of the first drive part (131b), the second drive part (132b), and the third drive part (133b).

The control unit (113) may control the first drive part (131b), the second drive part (132b), and the third drive part (133b) so that the first end plate (111) may move a predetermined distance from the initial position to pressurize the plurality of battery cells (20).

For example, the control unit (113) may control the first drive part (131b), the second drive part (132b), and the third drive part (133b) so that the pressurization on the first end plated (111) is stopped if the distance that the first end plate (111) has moved from the initial position to the predetermined distance is measured, and thus it is pressurized by moving to the predetermined distance. That is, the pressurization may be maintained.

However, it is not necessarily limited to only such a method, and the first end plate (111) may be structurally provided to be movable only up to the predetermined distance.

For example, the control unit (113) may set a predetermined movement distance where the first end plate (111) or the second end plate (112) pressurizes the plurality of battery cells (20) with an appropriate level of pressurizing force capable of having a reference battery capacity. To this end, a pressure sensing unit (170) may be provided. That is, if the pressurization is performed to the set pressure, the pressurization may be stopped and the pressurization may be maintained.

The control unit (113) may control the operation of the second drive part (132b) and the third drive part (133b) to eliminate the minute displacement difference occurring between the central portion and both side portions of the first end plate (111) or the second end plate (112) after the first pressurizing member (131) pressurizes the first end plate (111).

The control unit (113) may control the second drive part (132b) and the third drive part (133b) so that after the first pressurizing member (131) pressurizes the central portion of the pressurizing plate (120), the second pressurizing rod (132a) and the third pressurizing rod (133a) pressurize both side portions of the first end plate (111) or the second end plate (112) together. Accordingly, the battery cell pressurizing device (100) of the present invention can uniformly pressurize a plurality of battery cells.

The battery cell pressurizing device (100) may further comprise a pressure sensing unit (170). The pressure sensing unit (170) may be provided to measure the pressurizing force added to the plurality of battery cells (20).

The control unit (113) may pressurize the first end plate (111) by determining whether to increase or decrease the pressurizing force based on the pressure value measured by the pressure sensing unit (170). The control unit (113) may control the operation of the first drive part (131b), the second drive part (132b), and the third drive part (133b) so that it may pressurize the first end plate (111) to the preset pressure.

For example, the control unit (113) may set the pressurizing force in which the plurality of battery cells (20) may have a reference battery capacity. The control unit (113) operates the first drive part (131b), the second drive part (132b), and the third drive part (133b) until the pressure measured by the pressure sensing unit (170) reaches the preset pressure, so that the first pressurizing rod (131a), the second pressurizing rod (132a), and the third pressurizing rod (133a) may pressurize the first end plate (111) or the second end plate (112).

Meanwhile, the control unit (113) may maintain the pressurizing force by controlling the operation of the first pressurizing member based on the output of the pressure sensing unit (170), and thereafter, the control unit (113) may maintain the pressurizing force by controlling the operation of the second pressurizing member and the third pressurizing member based on the output of the distance measuring unit (161, 162).

Therefore, three points providing and maintaining the pressurizing force are formed, so that it is possible to maintain the pressurizing force uniformly and stably during the activation process.

As shown in Figure 6, the pressurizing plate (120) may comprise a rib (120a). The rib (120a) may be provided in a form that it extends from the center to both sides, and the thickness of the horizontal section gradually becomes thinner in the extended direction. The rib (120a) may be formed to extend left and right from the rear of the pressurizing plate, and may be formed so that the protrusion height thereof become lower as it goes from the center to the left and right. Such a rib (120a) may be provided to reinforce mechanical rigidity for the matter that the first pressurizing member (131) pressurizing the central portion of the pressurizing plate (120), and may be formed so that the pressurizing force pressurizing the central portion is sufficiently transmitted to both sides of the pressurizing plate through the rib. Therefore, the greater the pressurizing force applied by the first pressurizing member (131), the better the thickness of the horizontal section becomes thicker. Furthermore, the pressurizing plate (120) has an advantage that the transmission range of the pressurizing force applied by the first pressurizing member (131) may be expanded to both sides through the rib (120a).

A fixing groove (H) into which the end of the first pressurizing rod (131a) of the first pressurizing member (131) may be inserted may be formed in the rib (120a). At this time, the end of the first pressurizing rod (131a) of the first pressurizing member (131) may be fixed in a state where it is inserted into the fixing groove (H). Any commonly used fixing method, such as adhesive, welding, or screw coupling, may be applied. That is, the first pressurizing rod (131a) and the pressurizing plate (120) may be coupled to each other, thereby being configured to be movable integrally.

The battery cell pressurizing device (100) may be provided with a first main frame (151) and a second main frame (152). The first main frame (151) and the second main frame (152) may be provided to form a certain space therein so that the multiple battery cells (20) are accommodated in the X-axis direction between both frames. That is, the first main frame (151) and the second main frame (152) may be spaced apart from each other by a predetermined distance to form a space where the multiple battery cells (20) are arranged. The first main frame and the second main frame may be fixed components.

The first main frame (151) and the second main frame (152) may have a hexahedral shape.

The first main frame (151) may be formed with a plurality of fixing holes (F) or fixing parts provided to fix the first pressurizing member (131), the second pressurizing member (132), and the third pressurizing member (133), respectively. As one example, the drive parts of the pressurizing members may be fixed on the first main frame (151), and the pressurizing rods may be provided to advance and retreat with respect to the fixed drive parts.

As illustrated in Figure 5, the battery cell pressurizing device (100) may be provided with a plurality of pillar shafts (153). Both ends of the plurality of pillar shafts (153) may be connected to the first main frame (151) and the second main frame (152), respectively. That is, the plurality of pillar shafts (153) may be provided so that the first main frame (151) and the second main frame (152) are connected and fixed. The plurality of pillar shafts (153) may be provided to set a separation distance between the first main frame (151) and the second main frame (152). Such a separation distance may be set in consideration of the volume of the plurality of battery cells (20) to be mounted.

Also, the battery cell pressurizing device (100) may further comprise a plurality of plate guide shafts (154) penetrating the first end plate (111) to guide the movement direction of the first end plate (111). The plurality of plate guide shafts (154) may extend along the lamination direction or the arrangement direction (X-axis direction) of the plurality of battery cells (20). Both ends of the plurality of plate guide shafts (154) may be coupled to the first main frame (151) and the second main frame (152), respectively.

In addition, the battery cell pressurizing device (100) may be provided with a base plate (193) where the plurality of battery cells (20) may be mounted on top. The base plate (193) may be positioned between the first main frame (151) and the second main frame (152). The base plate (193) may have a plate shape having a rectangular plane. The base plate (193) may be arranged so that its wide surface faces the up-and-down direction.

Furthermore, the battery cell pressurizing device (100) may comprise a plurality of partition plates (192) between the first end plate (111) and the second end plate (112). Battery cells (20) may be interposed between the plurality of partition plates (192). That is, the plurality of battery cells (20) may be provided to receive the pressurizing force transmitted to the first end plate (111), thereby pressurizing the battery cells (20) interposed between the plurality of partition plates (192).

In addition, the battery cell pressurizing device (100) may further comprise a plurality of sub-guide shafts (155) provided to guide the movement direction of the partition plate (192) and the first end plate (111). The plurality of sub-guide shafts (155) may be provided to penetrate the partition plate (192) and the first end plate (111).

As shown in Figure 3, the battery cell pressurizing device (100) may further comprise a support plate (191). The support plate (191) may be movably connected to the first main frame (151) or the second main frame (152). The support plate (191) may be formed with a groove (not shown) into which a moving shaft may be inserted. The moving shaft may be inserted into the groove of the support plate (191). Using such a structure, the support plate (191) may be moved forward and backward along the moving shaft.

In addition, the battery cell pressurizing device (100) may further comprise an elastic member (180). The elastic member (180) may be provided to elastically support the support plate (191) and the second end plate (112) therebetween. That is, the elastic member (180) may be interposed between the support plate (191) and the second end plate (112). The elastic member (180) may be provided so that it buffers the force transmitted from the first end plate (111) or the second end plate (112) and transmits it to the support plate (191). The elastic member (180) may be, for example, a spring member having a predetermined elastomeric force. For example, the battery cell pressurizing device (100) may be provided with a plurality of elastic members (180).

The above-described pressure sensing unit (170) may be provided to measure the pressure applied to the support plate (191) through the plurality of pressurized battery cells (20). The pressure sensing unit (170) may have a structure in which one end is connected to the support plate (191) and the other end is connected to the second main frame (152). Here, the pressure sensing unit (170) may be provided with a pressure sensor (170a) measuring the pressurizing force to output the value as an electrical signal. For example, the pressure sensing unit (170) may be a strain gauge-based load cell. For example, the pressure sensor of the pressure sensing unit (170) may support one surface of the support plate (191). Accordingly, the pressure sensing unit (170) may output the pressurizing force that the support plate (191) transmits to the pressure sensor (e.g., strain gauge) as the electric signal.

Therefore, by comprising the elastic member (180), the support plate (191), and the pressure sensing unit (170), there is an advantage that the pressurizing force applied to the plurality of battery cells (20) can be effectively measured.

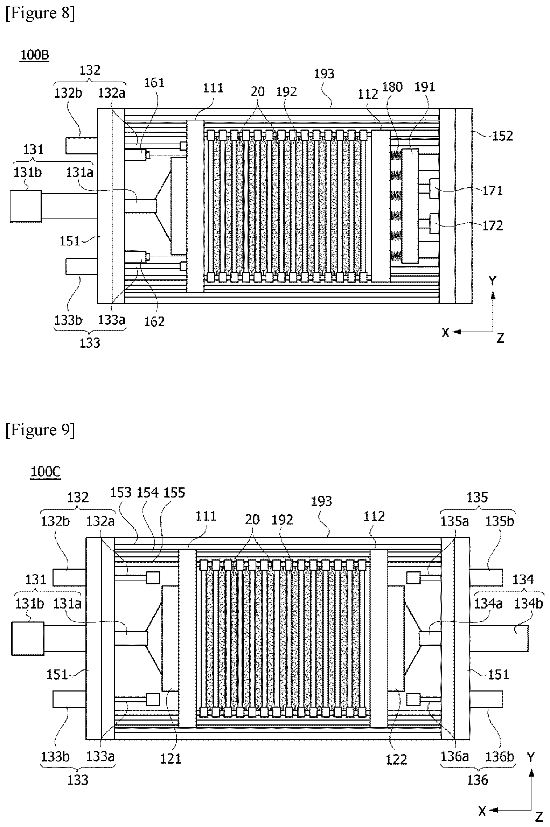

Figure 8 is a plan view schematically showing an appearance of components of a battery cell pressurizing device (100B) according to another example of the present invention.

The battery cell pressurizing device (100B) according to the present example may further comprise a first distance measuring unit (161) and a second distance measuring unit (162).

Specifically, the first distance measuring unit (161) and the second distance measuring unit (162) may be provided to measure the moved displacement of one side and the other side of the first end plate (111). For example, the first distance measuring unit (161) and the second distance measuring unit (162) may measure the displacement of one side portion (left side portion) and the other side portion (right side portion) of the first end plate (111), respectively. At this time, the control unit (113) may control the operations of the first drive part (131b), the second drive part (132b), and the third drive part (133b) based on the measured displacement values. Therefore, it is possible to precisely match the pressurization displacement of both sides as well as the central portion.

For example, the first distance measuring unit (161) and the second distance measuring unit (162) may be laser distance measuring devices. Here, the laser distance measuring device may comprise a device for generating a laser, a photodetector for sensing the laser which is reflected from a target and returned, and a counter for time calculation. The principle of distance measurement of the laser distance measuring device may be composed of emitting a laser with excellent directivity toward a target whose distance is to be measured, and then measuring the time for which the laser is reflected from the target and returned to calculate the distance.

The control unit (113) may control the operations of the second drive part (132b) and the third drive part (133b) to eliminate the minute displacement difference occurring between one side portion and the other side portion in reference to the center of the first end plate (111) based on the moved displacement values measured by the first distance measuring unit (161) and the second distance measuring unit (162).

Therefore, the battery cell pressurizing device (100B) of the present invention further comprises the first distance measuring unit (161) and the second distance measuring unit (162), whereby it is possible to measure the movement displacement of the first end plate (111), and besides, by sensing the minute displacement difference between one side portion and the other side portion of the first end plate (111), it is possible to precisely control the first pressurizing member (131), the second pressurizing member (132), and the third pressurizing member (133) based on the sensed displacement values, so that more complete and uniform pressurization can be performed, and thus there is an advantage capable of improving the battery cell quality.

Meanwhile, the battery cell pressurizing device (100B) according to the present example may be provided with two or more pressure sensing units (171, 172).

The two or more pressure sensing units (171, 172) may be provided between the support plate (191) and the second main frame (152). To measure the deviation of the pressurizing force added to both sides (left and right sides) based on the center of the plurality of battery cells (20), the two or more pressure sensing units (171, 172) may be connected to both sides (both sides in the Y-axis direction) based on the center of the support plate (191).

The two or more pressure sensing units (171, 172) may each be provided to measure the pressurizing forces transmitted from one side portion in the positive (+) direction of the Y-axis and the other side portion in the negative (-) direction of the Y-axis, respectively, based on the center of the support plate (191). To measure the pressurizing forces transmitted from one side portion and the other side portion, respectively, based on the center of the support plate (191), the first pressure sensing unit (171) and the second pressure sensing unit (172) may be provided.

The control unit (113) may control the operations of the first pressurizing member (131), the second pressurizing member (132), and the third pressurizing member (133) based on the pressure values output as electric signals from each of the two or more pressure sensing units (171, 172). For example, when the pressure value of the first pressure sensing unit (171) measuring one side portion of the support plate (191) is different from the pressure value of the second pressure sensing unit (172) measuring the other side portion of the support plate (191), the control unit (113) may control the operation of at least one of the second pressurizing member (132) and the third pressurizing member (133) to minimize the deviation in the pressurizing force.

Therefore, the deviation of the pressurizing force added to both sides of the plurality of battery cells (20) may be measured, and the control unit (113) may control the operation of the second pressurizing member (132) and the third pressurizing member (133) to minimize the deviation of the pressurizing force. Accordingly, the battery cell pressurizing device (100B) of the present invention can minimize the deviation of the pressurizing force applied to both sides of the plurality of battery cells (20), whereby the battery cell pressurizing device (100B) of the present invention can manufacture battery cells (20) with a certain specification (battery capacity) and effectively reduce the defect rate occurring in the activation process of the battery cell (20).

Figure 9 is a plan view schematically showing an appearance of components of a battery cell pressurizing device (100C) according to another example of the present invention.

According to the present example, there is a difference in that the first end plate (111) and the second end plate (112) are configured to pressurize the plurality of battery cells (20) on both sides of the plurality of battery cells (20).

That is, in the battery cell pressurizing device (100C) of Figure 9 according to another example of the present invention, pressurizing components for pressurizing the first end plate (111) and the second end plate (112) may not be provided only on any one of one side of the first end plate (111) or the other side of the second end plate (112), but may be provided on both sides.

That is, as the pressurizing components, the first pressurizing plate (121), the first pressurizing member (131), the second pressurizing member (132), and the third pressurizing member (133) may be provided on one side of the first end plate (111), and the second pressurizing plate (122), the fourth pressurizing member (134), the fifth pressurizing member (135), and the sixth pressurizing member (136) may be provided on the other side of the second end plate (112).

The first pressurizing plate (121), the first pressurizing member (131), the second pressurizing member (132), and the third pressurizing member (133) may be provided to pressurize the first end plate (111) in a direction facing the plurality of battery cells (20).

The second pressurizing plate (122), the fourth pressurizing member (134), the fifth pressurizing member (135), and the sixth pressurizing member (136) may be provided to pressurize the second end plate (112) in a direction facing the plurality of battery cells (20).

In addition, when compared to the battery cell pressurizing device (100) of Figure 3, the battery cell pressurizing device (100C) of Figure 9 may further comprise the second pressurizing plate (122), the fourth pressurizing member (134), the fifth pressurizing member (135), and the sixth pressurizing member (136). The remaining components may be the same as or like the example described in Figure 3.

Therefore, by pressurizing the plurality of battery cells (20) in both directions, there is an advantage that the pressure deviation between the battery cells (20) located at the center and the ends of the lamination direction or the arrangement direction of the plurality of battery cells (20) can be reduced.

The battery cell manufacturing method according to one example of the present invention may be performed using the above-described pressurizing device. The present example may comprise a central pressurizing step and a side pressurizing step. The side pressurizing step may comprise a pressurizing step on one side and a pressurizing step on the other side.

The central pressurizing step may be referred to as a step in which the first pressurizing member pressurizes the center portion of the pressurizing plate, thereby pressurizing the plurality of battery cells provided between the first end plate and the second end plate through the pressurizing plate.

The pressurizing step on one side may be referred to as a step in which the second pressurizing member pressurizes one side portion based on the center of the first end plate, thereby pressurizing the plurality of battery cells independently of the first pressurizing member.

The pressurizing step on the other side may be referred to as a step in which the third pressurizing member pressurizes the other side portion based on the center of the first end plate, thereby pressurizing the plurality of battery cells independently of the first pressurizing member.

The drive part of the first pressurizing member and the drive parts of the second pressurizing member and the third pressurizing member are different from each other. Therefore, when all the pressurizing members pressurize at the same time, it is not easy to provide uniform pressurization. Therefore, it is preferable that the pressurizing step on one side and the pressurizing step on the other side are performed after the central pressurizing step is completed.

In addition, the drive part of the second pressurizing member and the drive part of the third pressurizing member are of the same form. Therefore, it is easy to provide uniform pressurization. Therefore, it is preferable that the pressurizing step on one side and the pressurizing step on the other side are performed simultaneously.

The battery cell manufacturing method of the present invention comprises a central pressurizing step in which the first pressurizing member (131) pressurizes the central portion of the pressurizing plate (120) in the direction in which the plurality of battery cells (20) is laminated (the negative (-) direction of the X-axis). That is, as the first pressurizing member (131) pressurizes the central portion of the pressurizing plate (120), the first end plate (111) indirectly connected to the pressurizing plate (120) moves, and this first end plate (111) directly or indirectly pressurizes the plurality of battery cells (20).

If the pressurization is completed, a jig formation process may be performed while maintaining the pressurization. At this time, the battery cells may expand as the charging and discharging are repeated, and thus the pressurizing force may not be uniformly provided to the entire battery cell.

According to the present examples, three points for providing the pressurizing force and maintaining the pressurizing force are formed, so that the jig formation process can be performed effectively. Therefore, the thickness deviation of the battery cells can be resolved, and as a result, it is possible to effectively prevent the lithium precipitation problem.

### Industrial Applicability

It is described in the Detailed Description of Invention.

## Claims

1. A battery cell pressurizing device comprising:
a first end plate located on one side;
a second end plate facing the first end plate to be located on the other side;
a pressurizing plate moving and pressurizing the first end plate in a direction where the plurality of battery cells is laminated so that the plurality of battery cells arranged between the first end plate and the second end plate is pressurized;
a first pressurizing member provided to pressurize the central portion of the first end plate through the pressurizing plate by pressurizing the central portion of the pressurizing plate;
a second pressurizing member provided to pressurize, based on the center of the first end plate, one side portion independently of the first pressurizing member; and
a third pressurizing member provided to pressurize, based on the center of the first end plate, the other side portion independently of the first pressurizing member.

2. The battery cell pressurizing device according to claim 1,
**characterized in that** the second pressurizing member and the third pressurizing member are provided to directly pressurize
the first end plate at positions away from the pressurizing plate on both sides.

3. The battery cell pressurizing device according to claim 1,
**characterized in that** the second pressurizing member and the third pressurizing member are provided to pressurize
the pressurizing plate on both sides of the pressurizing plate based on the center of the pressurizing plate.

4. The battery cell pressurizing device according to claim 1,
**characterized in that** the first pressurizing member, the second pressurizing member, and the third pressurizing member each comprise a pressurizing rod having a variable length and a drive part driven to vary the length of the pressurizing rod.

5. The battery cell pressurizing device according to claim 4,
**characterized by** comprising: a first main frame provided on the outer side of the first end plate and formed with a fixing part to which the drive parts of the pressurizing members are fixed; and
a second main frame provided on the outer side of the second end plate and forming a pressurizing space by the first end plate and the second end plate between it and the first main frame.

6. The battery cell pressurizing device according to claim 4,
**characterized in that** when the first end plate is pressurized and moved by the first pressurizing member, the pressurizing rods of the second pressurizing member and the third pressurizing member are connected to the first end plate or the pressurizing plate so that their lengths are passively variable.

7. The battery cell pressurizing device according to claim 4,
**characterized in that** the pressurizing rods of the second pressurizing member and the third pressurizing member are connected to the first end plate or the pressurizing plate only when pressurizing the first end plate.

8. The battery cell pressurizing device according to claim 4,
**characterized in that** the drive part of the first pressurizing member comprises a servo motor provided so that the movement distance of the pressurizing rod of the first pressurizing member is precisely controllable.

9. The battery cell pressurizing device according to claim 4,
**characterized in that** the drive part and the pressurizing rod of each of the second pressurizing member and the third pressurizing member are a hydraulic cylinder and a cylinder rod provided to be movable with respect to the hydraulic cylinder.

10. The battery cell pressurizing device according to claim 4,
**characterized by** comprising a control unit provided to control operations of the drive parts of the pressurizing members.

11. The battery cell pressurizing device according to claim 10,
**characterized in that** the control unit controls the second pressurizing member and the third pressurizing member to pressurize the first end plate after the first pressurizing member pressurizes the first end plate.

12. The battery cell pressurizing device according to claim 10,
**characterized in that** the device comprises a pressure sensing unit provided to measure a pressurizing force applied to the battery cell, and
the control unit controls operations of the drive parts of the pressurizing members based on the output of the pressure sensing unit.

13. The battery cell pressurizing device according to claim 10,
**characterized in that** the control unit controls operations of the drive parts of the pressurizing members so that the first end plate moves a predetermined distance from the initial position to be pressurized.

14. The battery cell pressurizing device according to claim 13,
**characterized in that** the control unit controls
operations of the drive part of the first pressurizing member and the drive part of the s econd pressurizing member to eliminate a minute displacement difference occurring between the central portion and both side portions of the first end plate when the first pressurizing member pressurizes the central portion of the first end plate or the second end plate.

15. The battery cell pressurizing device according to claim 14,
**characterized by** comprising a distance measuring unit provided to measure the moved displacement of one side and the other side of the first end plate.

16. The battery cell pressurizing device according to claim 1,
**characterized in that** the pressurizing plate comprises
a rib extending from the center to both sides and having a lower protrusion height as it goes from the center to the extension direction.

17. The battery cell pressurizing device according to claim 16,
**characterized in that** the second pressurizing member and the third pressurizing member are provided to be connected to the pressurizing plate at the outer sides of both sides of the rib.

18. A battery cell manufacturing method using a battery cell pressurizing device having a first end plate, a second end plate, and a pressurizing plate, **characterized by** comprising:
a central pressurizing step in which a first pressurizing member pressurizes the central portion of the pressurizing plate, thereby pressurizing a plurality of battery cells provided between the first end plate and the second end plate through the pressurizing plate;
a pressurizing step on one side in which a second pressurizing member pressurizes, based on the center of the first end plate, one side portion, thereby pressurizing the plurality of battery cells independently of the first pressurizing member; and
a pressurizing step on the other side in which a third pressurizing member pressurizes, based on the center of the first end plate, the other side portion, thereby pressurizing the plurality of battery cells independently of the first pressurizing member.

19. The battery cell manufacturing method according to claim 18,
**characterized in that** the pressurizing step on one side and the pressurizing step on the other side are performed after the completion of the central pressurizing step.

20. The battery cell manufacturing method according to claim 18,
**characterized in that** the pressurizing step on one side and the pressurizing step on the other side are performed simultaneously.
